(19) Europäisches Patentamt
European Patent Office
Office européen des brevets

(11) **EP 4 411 871 A1**

(12) **EUROPEAN PATENT APPLICATION**

(43) Date of publication:
**07.08.2024 Bulletin 2024/32**

(21) Application number: **24153899.0**

(22) Date of filing: **25.01.2024**

(51) International Patent Classification (IPC):
**H01M 4/134** (2010.01)   **H01M 4/36** (2006.01)
**H01M 4/38** (2006.01)   **H01M 10/0525** (2010.01)

(52) Cooperative Patent Classification (CPC):
**H01M 4/134; H01M 4/366; H01M 4/386;
H01M 4/587; H01M 4/625; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023 KR 20230013155**

(71) Applicant: **SK On Co., Ltd.
Seoul 03161 (KR)**

(72) Inventors:
• KIM, Seon Ah
  34124 Daejeon (KR)
• PARK, Yang Kyu
  34124 Daejeon (KR)
• LEE, Jong Hyuk
  34124 Daejeon (KR)

(74) Representative: **Prüfer & Partner mbB
Patentanwälte · Rechtsanwälte
Sohnckestraße 12
81479 München (DE)**

(54) **ANODE ACTIVE MATERIAL FOR LITHIUM SECONDARY BATTERY AND LITHIUM SECONDARY BATTERY INCLUDING THE SAME**

(57)   An anode active material for a lithium secondary battery includes a silicon-based active material that includes a core particle and a carbon coating formed on or over the core particle. The anode active material satisfies a specific relation within a specific range. A lithium secondary battery includes an anode including the anode active material, and a cathode facing the anode.

## FIG. 1

**Description**

BACKGROUND

1. Field

Embodiments of the present disclosure relate to an anode active material for a lithium secondary battery and a lithium secondary battery including the same.

2. Description of the Related Art

Secondary batteries can be charged and discharged repeatedly and are widely employed as power source of mobile electronic devices such as camcorders, mobile phones, laptop computers, and the like. Some examples of secondary batteries include, lithium secondary batteries, nickel-cadmium batteries, and nickel-hydrogen batteries. The lithium secondary batteries are more widely developed and applied than the other secondary batteries mainly because of their higher operational voltage, energy density per unit weight, charging rate, and their very compact dimensions.
For example, the lithium secondary battery may include an electrode assembly including a cathode, an anode and a separation layer (separator), and an electrolyte immersing the electrode assembly. The lithium secondary battery may further include an outer case, for example a pouch type enclosing the electrode assembly and the electrolyte.
The anode may contain a material such as a carbon-based (e.g., graphite), or a silicon-based material that can intercalate or store lithium ions during the battery operation as an anode active material. Repeat charging and discharging of the lithium secondary battery may cause mechanical and chemical damage or deterioration such as cracks of the active material particles due to expansion and contraction, degraded or less contact between the anode active material particles, and short-circuits.
Efforts to improve the stability of the anode active material are complex because changing the structure, or shape, of the particles may also change their conductivity and the power of the secondary battery. Hence, novel solutions are needed that improve the stability of the anode active material particle, prevent a decrease in the conductivity and power/capacity properties of the secondary battery.

SUMMARY

Embodiments of the present disclosure solve the aforementioned problems of the prior art. According to an embodiment of the present disclosure, there is provided an anode active material for a lithium secondary battery having improved stability, electrical property and activity.
According to another embodiment of the present disclosure, there is provided a lithium secondary battery employing the inventive anode active material and exhibiting significantly improved electrical properties and activity. The term activity as used here refers to the ability of the battery to perform its intended functions effectively, and encompasses various aspects of the battery performance, such as capacity, charging and discharging rates, cycle life, and overall efficiency.
According to an embodiment of the present disclosure, an anode active material for a lithium secondary battery is provided which includes a silicon-based active material that includes a core particle and a carbon coating formed on or over the core particle. The carbon coating may be formed on or over the core particle and be in direct contact with the core particle. The anode active material has an $S_A$ defined by the following Equation 1 in a range from 0.5 to 2.0.

$$\text{Equation 1}$$

$$S_A = \{SPAN \times (SSA)^2\}/(I_C/I_A)$$

In Equation 1, SPAN represents $(D_{90}-D_{10})/D_{50}$, and $D_{10}$, $D_{50}$ and $D_{90}$ are particle diameters at volume fractions of 10%, 50% and 90%, respectively, in a volume-weighted particle size distribution of the silicon-based active material. SSA is a specific surface area in a unit of $m^2/g$ of the silicon-based active material. $I_C$ is a peak intensity corresponding to a crystalline region of the silicon-based active material obtained through a Raman spectroscopy, and $I_A$ is a peak intensity corresponding to an amorphous region of the silicon-based active material obtained through the Raman spectroscopy.
In some embodiments, Ic is a maximum value of peak intensities measured at a Raman shift of 500 cm$^{-1}$ to 530 cm$^{-1}$, and $I_A$ is a maximum value of peak intensities measured at a Raman shift of 450 cm$^{-1}$ to 490 cm$^{-1}$.
In some embodiments, the core particle may include a silicon oxide of the formula SiOx (0<x<2).

In some embodiments, the carbon coating may include a crystalline carbon or an amorphous carbon.

In some embodiments, the carbon coating may cover 50% or more of an outer surface of the core particle.

In some embodiments, the SPAN in Equation 1 may be in a range from 0.7 to 1.2.

In some embodiments, the specific surface area of the silicon-based active material may be in a range from 1 $m^2$/g to 2 $m^2$/g.

In some embodiments, $S_B$ defined by Equation 2 may be in a range from 1.5 to 3.0.

$$[\text{Equation 2}]$$

$$S_B = D_{50}/(SSA)^2$$

In Equation 2, $D_{50}$ is a particle diameter at volume fractions of 50% in the volume-weighted particle size distribution of the silicon-based active material. SSA is a specific surface area in a unit of $m^2$/g of the silicon-based active material.

In some embodiments, a content of particles having a diameter of 2 $\mu$m or less in the silicon-based active material may be in a range from 0.2 wt% to 1.0 wt% based on a total weight of the silicon-based active material.

In some embodiments, a minimum particle diameter ($D_{min}$) of the silicon-based active material may be 1.1 $\mu$m or more.

In some embodiments, the minimum particle diameter ($D_{min}$) of the silicon-based active material may be in a range from 1.5 $\mu$m to 7 $\mu$m.

In some embodiments, a maximum particle diameter ($D_{max}$) of the silicon-based active material may be 25 $\mu$m or less.

In some embodiments, the maximum particle diameter ($D_{max}$) of the silicon-based active material may be in a range from 10 $\mu$m to 20 $\mu$m.

In some embodiments, the anode active material may further include a carbon-based active material.

In some embodiments, the carbon-based active material may include artificial graphite, natural graphite or a mixture thereof.

In some embodiments, a content of the silicon-based active material may be greater than 0 wt% and less than or equal to 15 wt% based on a total weight of the anode active material.

A lithium secondary battery includes an anode including the anode active material for a lithium secondary battery according to the above-described embodiments, and a cathode facing the anode.

The anode active material according to embodiments of the present disclosure may include a silicon-based active material including a core particle and a carbon coating formed on or over the core particle. An energy density and charge/discharge capacity of the anode active material may be enhanced by the core particle.

Damage such as cracks, fractures and side reactions of the core particle may be prevented by the carbon coating. Additionally, the carbon coating may additionally provide a moving path of ions (e.g., lithium ions) or electrons, thereby improving power properties of the secondary battery.

The silicon-based active material may have a specific surface area within a desirable range. Accordingly, ion conductivity and chemical stability may be improved, and life-span properties may be improved. The silicon-based active material may have a desirable particle size distribution. Therefore, side reactions with the electrolyte and the resulting electrolyte consumption may be reduced, and long-term life-span and high-temperature storage properties may be improved while enhancing power and life-span.

The lithium secondary battery of the present disclosure may be widely applied in green technology fields such as an electric vehicle, a battery charging station, a solar power generation, a wind power generation, etc., using a battery. The lithium secondary battery according to the present disclosure may be used for eco-friendly electric vehicles and hybrid vehicles to prevent a climate change by suppressing air pollution and greenhouse gas emission.

These and other features and advantages of the present invention will become better understood from the following drawings and detailed description of specific example embodiments of the present disclosure.

BRIEF DESCRIPTION OF THE DRAWINGS

FIG. 1 is a schematic cross-sectional view illustrating an anode with an anode active material on the anode for a lithium secondary battery in accordance with embodiments of the present disclosure.

FIG. 2 is a schematic plan view illustrating a lithium secondary battery in accordance with embodiments of the present disclosure.

FIG. 3 is a schematic cross-sectional view illustrating a lithium secondary battery in accordance with embodiments of the present disclosure.

DETAILED DESCRIPTION OF THE EMBODIMENTS

According to embodiments of the present disclosure, an anode active material for a lithium secondary battery (hereinafter, that may be abbreviated as an anode active material) including a silicon-containing active material that includes a carbon-coating is provided.

According to embodiments of the present disclosure, a lithium secondary battery including the anode active material is provided.

Hereinafter, the anode active material and the lithium secondary battery according to embodiments of the present disclosure will be described in more detail with reference to specific embodiments and the accompanying drawings.

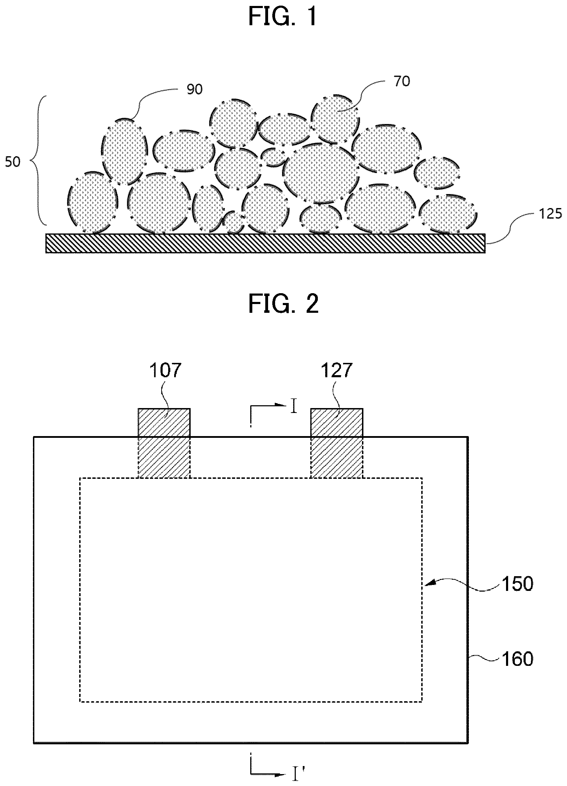

FIG. 1 is a schematic cross-sectional view illustrating an anode for a lithium secondary battery in accordance with embodiments of the present disclosure.

Referring to FIG. 1, an anode for a lithium secondary battery includes an anode current collector 125 and an anode active material layer 50 formed on or over the anode current collector 125. The anode active material layer contains an anode active material comprising a plurality of particles. The anode active material layer 50 may be formed directly on a top surface of the current collector 125 as shown in the illustrated embodiment of FIG. 1.

The anode active material includes a silicon-based active material (e.g., a silicon-containing active material). The silicon-based active material particle 50 includes a core particle 70 and a carbon coating 90 formed on or over the core particle 70.

The core particle 70 may include silicon (Si), a silicon oxide (SiOx) (0<x<2), or a silicon-metal alloy. These may be used alone or in a combination of two or more therefrom. An anode activity may be provided by the core particles 70.

In an embodiment, the silicon oxide (SiOx, 0<x<2) may include a lithium compound or a magnesium compound. For example, the SiOx may be pretreated with lithium or magnesium. For example, the SiOx may include lithium silicate or magnesium silicate (e.g., $MgO:XSiO_2$, where X denotes the average mole ratio of $SiO_2$ to MgO).

The core particles 70 may include a silicon-based material to have high energy density, and initial efficiency and charge/discharge capacity of the anode active material may be improved. However, a silicon-based material may react with an electrolyte solution to form a solid electrolyte interphase (SEI), and the electrolyte solution may be depleted by irreversible decomposition of the electrolyte solution, thereby increasing as resistance.

The carbon coating 90 may at least partially surround the core particle 70 so that it may block the exposure of the core particle 70 to the electrolyte solution to maintain the activity of the anode. Stated differently, the carbon coating 90 may at least partially cover the core particle 70 to prevent the electrolyte from contacting the core particle 70.

For example, for existing anode active materials, when charging/discharging of the secondary battery is repeated, because of the contact with the electrolyte and swelling of the anode active material, the surface of the core particle 70 may be mechanically damaged. Contact of the electrolyte with the core particle 70 may also cause chemical damage to the surface of the core particle 70. Furthermore, gas generation has been observed caused by side reactions as the surface of the core particle 70 comes into contact with the electrolyte solution.

The present invention overcomes these problems by employing the carbon coating 90 which suppresses swelling and expansion of the core particle 70 due to repeated charging and discharging, and also prevents side reactions of the core particle 70 with the electrolyte solution, thereby improving life-span and capacity retention.

In an embodiment, the carbon coating 90 may be formed by a chemical vapor deposition (CVD), a physical vapor deposition (PVD), or thermal deposition of a hydrocarbon gas on the core particle 70. For example, the carbon coating 90 may be formed using a hydrocarbon gas, a coal-based material or a petroleum-based material.

In some embodiments, the carbon coating 90 may include an amorphous carbon such as hard carbon, soft carbon, fired coke, a mesophase pitch carbon and/or a crystalline carbon such as natural graphite and artificial graphite. These may be used alone or in any combination of two or more thereof.

In one embodiment, the carbon coating 90 may include the amorphous carbon, e.g., hard carbon and/or soft carbon. The amorphous carbon may have a structure where lithium ions may be easily intercalated, and thus may participate in a reaction even in a low state of charge (SOC) part where the silicon-based active material mainly reacts. Thus, deterioration of the core particles 70 due to repeated charging and discharging may be suppressed.

As illustrated in the embodiment of FIG. 1, at least a portion of an outer surface of the core particle 70 may be surrounded by the carbon coating 90. In an embodiment, the carbon coating 90 may be partially formed on the outer surface of the core particle 70. For example, the carbon coating 90 may cover 30% or more, or 50% or more of an area of the outer surface of the core particle 70.

Within the above range, the contact between the core particle 70 and the electrolyte solution may be efficiently blocked. Accordingly, the side reaction with the electrolyte solution and the gas generation may be reduced, thereby improving the life-span properties and high temperature properties of the secondary battery.

The carbon coating 90 may be discontinuously distributed on the core particle 70. For example, the carbon coating 90 may exist in the form of a plurality of islands in local areas of the outer surface of the core particle 70.

In an embodiment, the carbon coating 90 may be continuously and uniformly distributed on the outer surface of the core particle 70. For example, the carbon coating 90 may exist in the form of a film (e.g., a thin film form) covering at least a portion of the outer surface of the core particle 70.

If the carbon coating 90 is uniformly distributed on the surface of the core particle 70, lithium ions may be intercalated and deintercalated from all surfaces of the anode active material. Accordingly, power properties and rapid charging properties may be improved.

In some embodiments, a thickness of the carbon coating 90 may be in a range from about 0.001 $\mu$m to about 0.5 $\mu$m. In an embodiment, the thickness of the carbon coating 90 may be in a range from about 0.001 $\mu$m to about 0.3 $\mu$m, or from about 0.001 $\mu$m to about 0.1 $\mu$m. Within the above range, physical damages and structural collapse of the core particle 70 due to repeated charging and discharging may be prevented while maintaining high capacity and high rate properties of the secondary battery.

In some embodiments, a density of the carbon coating 90 may be in a range from about 0.5 $g/cm^3$ to about 1.9 $g/cm^3$. Within this range, the silicon-based active material particle 50 may be structurally stabilized by preventing physical damages to the core particle 70 due to the volume expansion.

In some embodiments, a content of the carbon coating 90 may be in a range from 0.01 weight percent (wt%) to 10 wt%, or 1 wt% to 5 wt% based on a total weight of the silicon-based active material. Within this range, the core particle 70 may be entirely covered with an appropriate thickness by the carbon coating 90, thereby suppressing damages caused by volume change of the core particles 70. Additionally, resistance and electrochemical properties of an electrode may be improved by preventing a disconnection of a contact due to charging/discharging of the secondary battery.

The content of the carbon coating 90 may be measured using a thermogravimetric analysis (TGA). For example, the content of the carbon coating 90 may be calculated by measuring a weight change by a heat treatment and an injection of nitrogen ($N_2$) gas. For example, a mass loss amount of the silicon-based active material may be measured from a graph for change in weigh against temperature by TGA, and the content of the carbon coating 90 may be calculated through the mass loss amount.

The silicon-based active material may include silicon (Si) having a crystalline structure. The crystalline structure may refer to a structure where a shape of a single silicon positioned within an inside of a particle has crystallinity.

In some embodiments, the silicon-based active material may include silicon having an amorphous structure. The amorphous structure may refer to a structure where the shape of the single silicon positioned within the inside of the particles is amorphous or where a crystallite size is excessively small and substantially non-measurable by a Scherrer equation.

In the anode active material according to embodiments of the present disclosure, $S_A$ defined by the following Equation 1 is in a range from 0.5 to 2.0.

[Equation 1]

$$S_A = \{SPAN \times (SSA)^2\}/(I_C/I_A)$$

SPAN represents $(D_{90}\text{-}D_{10}>)/D_{50}$

$D_{50}$ is a volume average particle diameter of the silicon-based active material. For example, $D_{50}$ may refer to a particle diameter at a volume fraction of 50% when a volume-weighted particle distribution of the silicon-based active material is measured using a laser diffraction particle size analyzer and accumulated from the smallest particle in the measured volume-weighted particle size distribution.

$D_{10}$ refers to a particle diameter at a volume fraction of 10% in the volume-weighted particle size distribution of the silicon-based active material.

$D_{90}$ refers to a particle diameter at a volume fraction of 90% in a volume-weighted particle size distribution of the silicon-based active material.

The term "particle size" or "particle diameter" used herein may refer to the longest diameter of any particle. The particle diameter may be measured using a scanning electron microscope (SEM), a transmission electron microscope (TEM), a light scattering method, or a laser diffraction method.

A specific surface area (SSA) may be a numerical value of a specific surface area of the silicon-based active material. For example, SSA may refer to a dimensionless value obtained by removing a unit from a specific surface area of the silicon-based active material 50 measured in a unit of $m^2/g$.

In a Raman spectrum obtained by Raman spectroscopy, $I_C$ is a peak intensity corresponding to a crystalline region (e.g., a region having a crystalline Si structure) of the silicon-based active material, and $I_A$ is a peak intensity corresponding to an amorphous region (e.g., a region having an amorphous Si structure).

For example, a ratio of the crystalline region in the silicon-based active material may be calculated from $I_C$, and a ratio of the amorphous region in the silicon-based active material may be calculated from $I_A$.

For example, $I_C$ may be a maximum value of a peak intensity measured at a Raman shift from 500 cm$^{-1}$ to 530 cm$^{-1}$, from 505 cm$^{-1}$ to 530 cm$^{-1}$, or from 510 cm$^{-1}$ to 530 cm$^{-1}$ in the Raman spectrum.

For example, $I_A$ may be a maximum value of a peak intensity measured in a Raman shift from 450 cm$^{-1}$ to 495 cm$^{-1}$, 460 cm$^{-1}$ or more and less than 490 cm$^{-1}$, or from 465 cm$^{-1}$ to 485 cm$^{-1}$ in the Raman spectrum.

If $S_A$ is less than 0.5, the side reaction between the electrolyte solution and the anode active material may be increased to cause fractures and cracks on a surface of the anode active material, and a reversible capacity of the anode active material may be decreased to degrade initial efficiency and capacity properties.

For example, an area where the anode active material contacts the electrolyte solution may increase, and the side reaction may be accelerated, and mechanical and structural stability of the active material may be degraded due to the gas generation. Accordingly, a thickness of the battery may increase during charging/discharging in the anode including the silicon-based active material.

If $S_A$ exceeds 2.0, swelling of a battery may increase during charging/discharging, and the anode active material may be deteriorated. A movement path of ions may be reduced, intercalation/de-intercalation process of ions may be hindered, and charging/discharging capacities may be degraded.

In an embodiment, $S_A$ may be in a range from 0.6 to 1.8, or from 0.7 to 1.7.

As $I_C/I_A$ of the silicon-based active material increases, growth of the crystalline region (c-Si) compared to the amorphous region (a-Si) in the silicon-based active material may be promoted. As $I_C/I_A$ decreases, growth of c-Si compared to a-Si may be suppressed. A content of c-Si may be increased or decreased by adjusting the value of $I_C/I_A$. For example, as the ratio increases and the content of c-Si in the silicon-based active material 50 increases, a volume change in the charging/discharging process may be increased, and the life-span properties of a secondary battery may be deteriorated.

In some embodiments, $I_C/I_A$ may be greater than 0, and less than or equal to 3.0. Within the above range, the volume expansion during charging/discharging and degradation of the anode active material may be suppressed, thereby improving battery properties. For example, $I_C/I_A$ may have a value in a range from 1.0 to 3.0, or from 1.5 to 3.0.

In some embodiments, $D_{50}$ may be 7 μm or less, or 6 μm or less.

In some embodiments, $D_{10}$ may be 5 μm or less, or 4 μm or less.

In some embodiments, $D_{90}$ may be 10 μm or less, or 9.5 μm or less.

SPAN of the silicon-based active material may be in a range from 0.7 to 1.2. If the SPAN value exceeds 1.2, the range of the particle size distribution may increase, and the volume change and thickness increase of the anode due to charging and discharging may be increased.

When the SPAN value is less than 0.7, a width of the particle size distribution may become narrow and the diameter of the particles may become uniform. Accordingly, a packing density of the anode active material particles may be lowered, and the contact between the anode active material particles may be degraded, and the life-span properties may be lowered.

In some embodiments, SPAN may be in a range from 0.8 to 1.1, e.g., from 0.85 to 1.0, or from 0.8 to 0.9.

In some embodiments, the silicon-based active material may have the specific surface area from 1 m$^2$/g to 2 m$^2$/g. For example, the specific surface area may be measured using a Brunauer-Emmett-Teller (BET) measurement method by a nitrogen gas adsorption amount using a specific surface area measuring apparatus.

If the specific surface part of the silicon-based active material is 2 m$^2$/g or less, the contact between the electrolyte solution and the active material may become lowered, and mechanical and structural stability of the silicon-based active material may be improved.

In some embodiments, the silicon-based active material may have a specific surface area from about 1.3 m$^2$/g to about 1.9 m$^2$/g, from about 1.4 m$^2$/g to about 1.8 m$^2$/g, or from about 1.5 m$^2$/g to about 1.8 m$^2$/g. Within the above range, cycle properties may be improved and intercalation and de-intercalation of the lithium ions may be promoted thereby improving charging/discharging capacity and rapid charging performance.

For example, damages and degradation of the active material particles may occur due to the volume change during charging/discharging of the secondary battery. In this case, loss of a contact point between the active material particles may occur, and the life-span properties of the secondary battery may be degraded. In example embodiments, the specific surface area of the silicon-based active material may be controlled, and thus the damages and degradation of the active material particles caused by the volume change may be avoided or reduced. Thus, the life-span properties of the secondary battery may be improved.

According to embodiments, the silicon-based active material may have a minimum particle diameter ($D_{min}$) of 1.1 μm or more. $D_{min}$ may be a smallest particle diameter measured from the volume-weighted particle size distribution of the silicon-based active material. If $D_{min}$ of the silicon-based active material is 1.1 μm or more, the contact area between the silicon-based active material 50 and the electrolyte solution may be controlled, thereby preventing collapse/regeneration of the solid electrolyte interface layer. Therefore, consumption of the electrolyte solution may be prevented, and the capacity and life-span properties of the secondary battery may be enhanced.

In some embodiments, the minimum particle diameter ($D_{min}$) of the silicon-based active material 50 may be in a range from about 1.5 $\mu$m to about 7 $\mu$m, or from about 2 $\mu$m to about 6 $\mu$m. Within this range, a diffusion distance of the lithium ions may be reduced to improve power properties and a charging rate, and initial charging/discharging capacity may be enhanced. Additionally, a conductivity of the lithium ions may be enhanced while suppressing the side reactions by controlling the contact area of the silicon-based active material. Thus, the power and life-span properties of the lithium secondary battery may be improved.

In some embodiments, a maximum particle diameter ($D_{max}$) of the silicon-based active material may be 25 $\mu$m or less, e.g., in a range from about 10 $\mu$m to about 20 $\mu$m. $D_{max}$ may refer to a particle diameter at a volume fraction of 99.9% when the particles are accumulated from the smallest particle in the volume-weighted particle size distribution of the silicon-based active material. Within this range, a particle diameter difference between the particles in the silicon-based active material may be reduced. Accordingly, a particle diameter deviation may be reduced, thereby improving the cycle properties and energy density.

In some embodiments, the silicon-based active material may include particles having a diameter of 2 $\mu$m or less (hereinafter, referred to as fine particles).

In some embodiments, a content of the fine particles may be in a range from 0.2 wt% to 1.0 wt% based on the total weight of the silicon-based active material. Within the above range, dispersion of the silicon-based active material may be improved and the contact area between the silicon-based active material and the electrolyte solution may be reduced. Thus, the side reaction may be suppressed, and the life-span and capacity retention of the secondary battery may be enhanced by a reversible charging and discharging behavior.

The content of the fine particles may be calculated from a volume fraction of the particles having a diameter of 2 $\mu$m or less in the volume-weighted particle size distribution of the silicon-based active material.

In the anode active material according to some embodiments, $S_B$ defined by Equation 2 below may be in a range from 1.5 to 3.0.

$$[\text{Equation 2}]$$

$$S_B = D_{50}/(SSA)^2$$

If $S_B$ exceeds 3.0, a filling density of the anode active material may be decreased, and the thickness change of the anode may be increased and the contact between the active material particles may be degraded. Accordingly, the life-span and capacity properties of the secondary battery may be degraded.

If $S_B$ is less than 1.5, uniformity of the anode active material layer may be degraded and chemical stability may also be degraded. Further, the side reactions between the electrolyte solution and the anode active material may increase, thereby increasing the volume change of the secondary battery and degrading the life-span and capacity properties.

In an embodiment, $S_B$ may be in a range from 1.5 to 2.7, or from 1.6 to 2.6. Within the above range, the capacity, power and life-span properties of the secondary battery may be further improved.

In example embodiments, the anode active material may further include a carbon-based active material. For example, the anode active material may further include the carbon-based active material particles that are distinct from the silicon-based active material particles. For example, the anode active material may include a mixture of the silicon-based active material and the carbon-based active material.

In some embodiments, the carbon-based active material may include an amorphous carbon such as fired coke, a mesophase pitch carbide, hard carbon and soft carbon and/or a crystalline carbon such as natural graphite and artificial graphite. These may be used alone or in a combination of two or more therefrom.

In an embodiment, the carbon-based active material may include the crystalline carbon such as artificial graphite or natural graphite. For example, the crystalline carbon has a relatively high discharge capacity and life-span properties, thereby improving the energy density of the secondary battery. Additionally, high-temperature storage and high-temperature life-span properties of the battery may be improved by including thermally and chemically stable natural graphite and artificial graphite.

In an embodiment, a crystallinity of the carbon coating 90 may be less than that of the carbon-based active material. For example, the carbon-based active material may have a high crystallinity by firing a carbon precursor at a high temperature of 900°C or higher.

In some embodiments, a content of the carbon coating 90 may be greater than 0 wt% and less than or equal to 10 wt%, or from 0.1 wt% to 8 wt% based a total weight of the anode active material. Within the above range, a coverage ratio of the carbon coating 90 may become high, and the side reaction with the electrolyte solution may be prevented. Thus, the volume expansion of the silicon-based active material may be suppressed without reducing the energy density, and rate properties of the battery may be improved.

In some embodiments, the content of the silicon-based active material may be greater than 0 wt% and less than or equal to 15 wt% based on the total weight of the anode active material. Within the above range, the expansion of the anode active material and a short circuit in the electrode may be suppressed, and the life-span and capacity recovery properties may be improved.

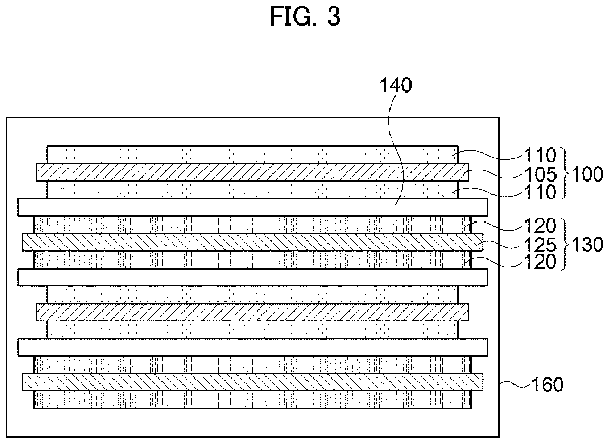

FIG. 2 and FIG. 3 are a schematic plan view and a cross-sectional view of a secondary battery, respectively, according to embodiments of the present disclosure. For example, FIG. 3 is a cross-sectional view taken along a line I-I' shown in FIG. 2 in a thickness direction of the secondary battery. For convenience of descriptions, illustrations of a cathode, an anode, and a separator are omitted in FIG. 2.

Referring to FIGS. 2 and 3, the secondary battery may include a cathode 100, an anode 130, and a separator 140.

In some embodiments, the secondary battery may be provided as a lithium secondary battery.

The cathode 100 may include a cathode current collector 105 and a cathode active material layer 110 formed on or over at least one surface of the cathode current collector 105. In some embodiments, the cathode active material layer 110 may be formed on or over both surfaces (e.g., an upper surface and a lower surface) of the cathode current collector 105. For example, the cathode active material layer 110 may be formed on or over each of the upper surface and the lower surface of the cathode current collector 105.

The cathode current collector 105 may include, e.g., stainless steel, nickel, aluminum, titanium, copper, or an alloy thereof. In an embodiment, the cathode current collector 105 may include aluminum or an aluminum alloy.

The cathode active material layer 120 may include a cathode active material, a binder and/or a conductive material. For example, a cathode slurry may be prepared by mixing and stirring the cathode active material with the binder and/or the conductive material in a solvent. The cathode slurry may be coated on the cathode current collector 105, and then dried and pressed to form the cathode active material layer 110.

Examples of the cathode active material may include a lithium iron phosphate-based compound, a lithium cobalt-based oxide, a lithium manganese-based oxide, a lithium nickel-based oxide, a lithium composite oxide.

For example, the cathode active material may include a layered compound such as lithium cobalt oxide ($LiCoO_2$) or lithium nickel oxide ($LiNiO_2$), a lithium manganese oxide such as $LiMnO_3$, $LiMn_2O_3$ and $LiMnO_2$, lithium copper oxide ($Li_2CuO_2$), a vanadium oxide such as $LiV_3O_8$, $LiFe_3O_4$, $V_2O_5$ and $Cu_2VO_7$, a lithium iron phosphate oxide such as $LiFePO_4$, etc.

In an embodiment, the cathode active material may contain a compound represented by Chemical Formula 1.

[Chemical Formula 1]     $Li_aNi_bM_{1-b}O_2$

In Formula 1, $0.95 \leq a \leq 1.08$, $b \geq 0.5$, and M may include at least one element of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba, and Sr.

In an embodiment, the cathode active material above may further include at least one of cobalt (Co) and manganese (Mn). For example, a nickel-cobalt-manganese (NCM)-based lithium oxide may be used as the cathode active material.

Nickel (Ni) may be provided as a metal related to the capacity of the lithium secondary battery. As a content of nickel increases, capacity and power of the lithium secondary battery may be increased. However, an excessively high content of Ni may be disadvantageous from aspects of mechanical and electrical stability.

Conductivity or resistance of the lithium secondary battery may be improved by cobalt (Co), and mechanical and electrical stability of the lithium secondary battery may be improved by manganese (Mn).

The chemical structure represented by Chemical Formula 1 represents a lattice structure of the cathode active material or a bonding relationship included in the crystal structure, and does not exclude introduction of an additional element. For example, M may serve as a main active element of the cathode active material. Chemical Formula 1 is provided to express the bonding relationship of the main active element and is to be interpreted as encompassing the introduction and substitution of the additional element.

In an embodiment, an auxiliary element may be further included in addition to the main active element to improve the chemical stability of the cathode active material or the crystal structure. The auxiliary element may be mixed together in the crystal structure to form a bond, and this case should be understood to be included within a range of the chemical structure represented by Chemical Formula 1.

The binder may include a vinylidene fluoride-hexafluoropropylene copolymer (PVDF-co-HFP), polyvinylidene fluoride (PVDF), polyacrylonitrile, polymethylmethacrylate, polyvinyl alcohol, polyvinylpyrrolidone, polyethylene, polypropylene, polyacrylic acid, styrene-butadiene rubber (SBR), etc., and may be used together with a thickener such as carboxymethyl cellulose (CMC).

For example, a PVDF-based binder may be used as a binder for forming the cathode. Accordingly, a content of the binder for forming the cathode active material layer 110 may be reduced, and the content of the cathode active material may be relatively increased, thereby improving the power and capacity of the secondary battery.

The conductive material may include a carbon-based conductive material such as graphite, carbon black, a carbon nanofiber and carbon nanotube and/or a metal-based conductive material such as tin, tin oxide, zinc oxide, titanium oxide and a metal fiber.

In some embodiments, an electrode density of the cathode 100 may be in a range from 3.0 g/cc to 3.9 g/cc, and may be in a range from 3.2 g/cc to 3.8 g/cc.

The anode 130 may include an anode current collector 125 and an anode active material layer 120 formed on or over at least one surface of the anode current collector 125. In some embodiments, the anode active material layer 120 may be formed on or over both surfaces (e.g., upper surface and lower surface) of the anode current collector 125.

The anode active material layer 120 may be coated on both the upper and lower surfaces of the anode current collector 125. For example, the anode active material layer 120 may directly contact the surface of the anode current collector 125.

The anode current collector 125 may include gold, stainless steel, nickel, aluminum, titanium, copper, or an alloy thereof. In an embodiment, the anode current collector 125 may include copper or a copper alloy.

In some embodiments, the anode active material layer 120 may include the cathode active material according to the above-described embodiments. For example, the anode active material may be mixed and stirred with a binder, a conductive material, and/or a dispersive agent in a solvent to prepare an anode slurry. The anode slurry may be coated on the anode current collector 125, and then dried and pressed (rolled) to form the anode active material layer 120.

Materials substantially the same as or similar to materials used to form the cathode 100 may be used as the binder and the conductive material. In some embodiments, the binder for forming the anode may include, e.g., styrene-butadiene rubber (SBR) or an acrylic binder for compatibility with a graphite-based active material and may be used together with a thickener such as carboxymethyl cellulose (CMC).

In some embodiments, an electrode density of the anode 130 may be in a range from 1.0 g/cc to 1.9 g/cc.

In some embodiments, an area (e.g., a contact area with the separator 140) and/or a volume of the anode 130 may be greater than an area and/or a volume of the cathode 100. Accordingly, lithium ions generated from the cathode 100 may be easily transferred to the anode 130 without, e.g., being precipitated, thereby further improving output power and capacity properties.

The separator 140 may be interposed between the cathode 100 and the anode 130. The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, etc. The separator 140 may include a non-woven fabric formed of a glass fiber having a high melting point, a polyethylene terephthalate fiber, etc.

The separator 140 may extend in a length direction between the cathode 100 and the anode 130. A plurality of the cathodes 100 and the anodes 130 may be stacked using the separator 140 in the thickness direction.

In some embodiments, an electrode cell may be defined by the cathode 100, the anode 130 and the separator 140, and a plurality of electrode cells may be stacked to form an electrode assembly 150. For example, the electrode assembly 150 may be formed by winding, stacking, folding, etc. of the separator 140.

The electrode assembly 150 may be accommodated in the case 160, and an electrolyte solution may also be injected into the case 160. The case 160 may include, e.g., a pouch, a can, etc.

In some embodiments, a non-aqueous electrolyte solution may be used as the electrolyte solution.

The non-aqueous electrolyte solution may include a lithium salt as an electrolyte and an organic solvent. The lithium salt may be represented by $Li^+X^-$, and examples of an anion ($X^-$) of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$; $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, gamma-butyrolactone, propylene sulfite, tetrahydrofuran, etc. These may be used alone or in a combination of two or more therefrom.

As illustrated in FIG. 2, electrode tabs (a cathode tab and an anode tab) may protrude from the cathode current collector 105 and the anode current collector 125 included in each electrode cell, respectively, to one side of the case 160. The electrode tabs may be fused together with the one side of the case 160, and may be connected to electrode leads (a cathode lead 107 and an anode lead 127) being exposed or extending to an outside of the case 160.

FIG. 2 illustrates that the cathode lead 107 and the anode lead 127 are formed at the same side of the lithium secondary battery or the case 160, but the cathode lead 107 and the anode lead 127 may be formed at opposite sides. For example, the cathode lead 107 may be formed at one end of the case 160, and the anode lead 127 may be formed at the other end of the case 160.

The lithium secondary battery may be manufactured in, for example, a cylindrical type using a can, a prismatic type, a pouch type, a coin type, etc.

The lithium secondary battery includes the anode active material as described above to have improved cycle properties, long-term storage stability, and charge/discharge capacity. Additionally, e.g., crystallinity of the silicon-based active material or a content of fine particles may be controlled to improve conductivity of ions or electrons. Therefore, lithium ions may be easily intercalated and de-intercalated, side reactions between the anode active material and the electrolyte solution may be suppressed, and degradation of the capacity and power of the battery may be prevented.

Hereinafter, preferred examples are proposed to more concretely describe the embodiments of the present disclosure.

Examples and Comparative Examples

1. Preparation of anode active material

SiOx (0<x<2) was introduced into a ball mill container and pulverized so that $D_{50}$ became 7 $\mu$m or less. The pulverized particles (core particles) were subjected to a chemical vapor deposition (CVD) treatment at a temperature from 550°C to 1150°C in a hydrocarbon gas atmosphere such as acetylene, ethylene, propylene, methane, etc., to form a carbon coating on the core particles.

Silicon-based active materials A-1 to A-6 were prepared under different pulverizing process conditions and CVD process conditions. The conditions of the pulverizing process for SiOx were adjusted such that a particle size distribution of the silicon-based active material satisfied Table 1 below, and the CVD process conditions were adjusted such that $I_C/I_A$ satisfied Table 1 below.

Physical properties of the silicon-based active material were analyzed and shown in Table 1.

The silicon-based active material and a carbon-based active material (artificial graphite $D_{50}$: 13 $\mu$m) were mixed in a weight ratio of 5:95 to prepare an anode active material. For Comparative Example 3, the silicon-based active material and the carbon-based active material (artificial graphite D50: 13 $\mu$m) were mixed in a weight ratio of 7:93 to prepare an anode active material.

2. Measurement of volume-based particle size distribution

Each of the silicon-based active materials A-1 to A-6 was added to ethanol. After the ethanol was ultrasonically dispersed, a volume-weighted particle size distribution curve was obtained by measuring a diffraction pattern difference according to a particle size using a laser diffraction particle size analyzer (Microtrac MT 3000) in a refractive index range from 5% to 10%.

$D_{min}$ was measured as the smallest particle diameter in the volume-weighted particle size distribution curve, and particle diameters at 10%, 50%, 90% and 99.9% of the volume fractions were measured to obtain $D_{10}$, $D_{50}$, $D_{90}$ and $D_{max}$.

A volume fraction of fine particles having a diameter of 2 $\mu$m or less was measured, and a content of the fine particles was calculated from the measured volume fraction and a true density of the silicon-based active material.

3. Measurement of ratio of c-Si intensity to a-Si intensity ($I_C/I_A$)

For each of the silicon-based active materials A-1 to A-6, Raman spectroscopy (Horiba, LabRam HR evolution) was performed under conditions of 532 nm and 20 magnification to obtain a Raman spectrum. A c-Si peak and a a-Si peak were measured using Raman shifts 520 cm$^{-1}$ and 470 cm$^{-1}$, respectively, as reference points. $I_C/I_A$ was calculated by performing a deconvolution after shifting the measured value based on a center (1000 cm$^{-1}$).

4. Measurement of specific surface area measurement

A specific surface area of each of the silicon-based active materials A-1 to A-6 was measured by a BET method using an amount of nitrogen gas adsorption with a specific surface area measuring apparatus (MOUNTECH Macsorb HM Model-1208).

Specifically, the silicon-based active material was put in a test tube, heated to a temperature of 300°C, and a nitrogen gas was supplied for 1 hour. Thereafter, a weight of the sample was calculated, and a specific surface area of the sample was measured using the specific surface area measuring apparatus.

The results are shown in Table 1.

[Table 1]

| | content of fine particles (wt%) | $D_{min}$ ($\mu$m) | $D_{10}$ ($\mu$m) | $D_{50}$ ($\mu$m) | $D_{90}$ ($\mu$m) | $D_{max}$ ($\mu$m) | specific surface area (m²/g) | $I_C/I_A$ |
|---|---|---|---|---|---|---|---|---|
| Example 1 (A-1) | 0.96 | 1.73 | 3.58 | 5.8 | 9.15 | 17.38 | 1.51 | 2.96 |
| Example 2 (A-2) | 0.84 | 1.73 | 3.11 | 4.76 | 7.1 | 13.25 | 1.66 | 1.39 |
| Example 3 (A-3) | 0.82 | 1.98 | 3.29 | 4.99 | 7.39 | 13.25 | 1.50 | 1.95 |
| Comparative Example 1 (A-4) | 1.13 | 0.88 | 2.46 | 4.6 | 7.67 | 15.17 | 2.44 | 3.11 |
| Comparative Example 2 (A-5) | 0.80 | 1.08 | 3.34 | 4.98 | 7.34 | 13.25 | 3.10 | 2.56 |
| Comparative Example 3 (A-6) | 0.97 | 2.27 | 3.76 | 5.55 | 8.14 | 15.17 | 1.42 | 3.67 |

Table 1 shows physical properties of the silicon-based active material contained in the anode active material in each of Examples and Comparative Examples. For example, the anode active material according to Example 1 is a mixture in which the silicon-based active material A-1 and the carbon-based active material were mixed in a weight ratio of 5: 95.

The values of SPAN, $S_A$ and $S_B$ of the silicon-based active material were calculated and shown in Table 2 below.

[Table 2]

| | SPAN | $S_A$ | $S_B$ |
|---|---|---|---|
| Example 1 (A-1) | 0.96 | 0.74 | 2.54 |
| Example 2 (A-2) | 0.84 | 1.67 | 1.73 |
| Example 3 (A-3) | 0.82 | 0.95 | 2.22 |
| Comparative Example 1 (A-4) | 1.13 | 2.17 | 0.77 |
| Comparative Example 2 (A-5) | 0.80 | 3.01 | 0.52 |
| Comparative Example 3 (A-6) | 0.79 | 0.43 | 2.75 |

5. Fabrication of anode and cathode

(1) Fabrication of anode

The anode active material, carbon nanotubes (CNT) and Super-P as a conductive material, carboxymethyl cellulose (CMC) as a thickener, and SBR as a binder were mixed in a weight ratio of 97.2:0.1:1.2:1.5 (anode active material : conductive material : thickener : binder) to prepare an anode slurry. Thereafter, the anode slurry was coated on a copper substrate (Cu foil), dried and pressed to prepare an anode having a mixture density of 5 mg/cm² to 12 mg/cm² (based on a cross-section) and 1.7 g/cc.

(2) Fabrication of cathode

A cathode slurry was prepared by mixing $LiNi_{0.8}Co_{0.1}Mn_{0.1}O_2$ as a cathode active material, carbon black as a conductive material, and polyvinylidene fluoride (PVDF) as a binder in a weight ratio of 92:5:3. The cathode slurry was coated on an aluminum substrate, dried and pressed to prepare a cathode.

Experimental Example

1. Manufacturing of lithium secondary battery in the form of a coin cell

Li foil was used as a cathode, and the anode and the cathode were disposed with a polyethylene separator (13 $\mu$m) interposed therebetween. A coin cell-type secondary battery was manufactured by using 1M $LiPF_6$ solution

including 1 wt% of FEC (in a mixed solvent of ethylene carbonate (EC) and ethylmethyl carbonate (EMC); 30vol%:70 vol%) as an electrolyte solution. The secondary battery was left at room temperature (25°C) for 12 hours for impregnation of the electrolyte solution.

## 2. Evaluation on life-span property

The secondary batteries (coin cells) according to Examples and Comparative Examples were stabilized by performing charge (CC/CV, rate 0.1C, lower limit voltage 0.005V, cut-off current 0.01C) and discharge (CC, 0.1C, upper limit voltage 1.5V cut-off) for an initial five cycles at 25°C.

Thereafter, 50 cycles of charging/discharging were carried out using charge (CC/CV, rate 0.5C, lower limit voltage 0.005V, cut-off current 0.05C) and discharge (CC, 0.5C, upper limit voltage 1.5V cut-off) as one cycle. A life-span property was evaluated as a percentage of a discharge capacity at the 50th cycle relative to a capacity at the 1st cycle.

## 3. Fabrication of full-cell type lithium secondary battery

The cathode and the anode were disposed with a polyethylene (PE) separator (13 $\mu$m) interposed therebetween to form an electrode cell, and the electrode cells were stacked to form an electrode assembly. The electrode assembly was accommodated in a pouch and electrode tab portions were fused. A 1M LiPF$_6$ solution in a mixed solvent of ethylene carbonate (EC) and ethylmethyl carbonate (EMC) (EC:EMC=30 volume%: 70 volume%) was injected as an electrolyte solution, and the pouch was sealed to prepare a secondary battery.

## 4. Evaluation on high temperature life-span property

Charging/discharging of 600 cycles were repeatedly performed using charging (CC/CV, 0.5C, upper limit voltage 4.2V, cut-off current 0.05C) and discharging (CC, 0.5C, lower limit voltage 2.5V cut-off) at 45°C as one cycle for the secondary batteries (full cells) according to Examples and Comparative Examples. A life-span property was evaluated as a percentage of a discharge capacity at 600th cycle relative to a discharge capacity at the 1st cycle.

## 5. Evaluation on high temperature storage property

Charging (CC/CV, 0.5C, upper limit voltage 4.2V, cut-off current 0.05C) and discharging (CC, 0.5C, lower limit voltage 2.5V cut-off) were performed once for the secondary batteries (full cells) according to Examples and Comparative Examples at 25°C, and then charged at 100% SOC and stored at 60°C for 12 weeks. A high-temperature storage property was evaluated as a percentage of a discharge capacity after 12 weeks relative to an initial discharge capacity.

Evaluation results are shown in Table 3 below.

[Table 3]

| | life-span property (%) | high temperature life-span property (%) | high temperature storage property (%) |
|---|---|---|---|
| Example 1 (A-1) | 98.8 | 89.87 | 93.0 |
| Example 2 (A-2) | 98.4 | 89.41 | 92.5 |
| Example 3 (A-3) | 98.5 | 89.72 | 92.8 |
| Comparative Example 1 (A-4) | 97.1 | 86.87 | 90.0 |
| Comparative Example 2 (A-5) | 96.0 | 84.22 | 89.8 |
| Comparative Example 3 (A-6) | 96.5 | 85.64 | 87.9 |

Referring to Tables 1 to 3, in Examples, life-span, high-temperature life-span and high-temperature storage properties were generally improved.

In Comparative Examples 1 and 2, the S$_A$ exceeded 2.0, and the life-span and high-temperature properties of the lithium secondary battery were degraded. In Comparative Example 3, S$_A$ was less than 0.5, and the life-span and high-temperature properties of the lithium secondary battery were degraded.

**Claims**

1. An anode active material for a lithium secondary battery comprising a silicon-based active material that comprises a core particle and a carbon coating on the core particle, **characterized by** an $S_A$ ranging from 0.5 to 2.0, wherein the $S_A$ is defined by Equation 1:

$$Equation\ 1$$

$$S_A = \{SPAN \times (SSA)^2\}/(I_C/I_A)$$

wherein, in Equation 1, SPAN represents $(D_{90}-D_{10})/D_{50}$,
$D_{10}$, $D_{50}$ and $D_{90}$ are particle diameters at volume fractions of 10%, 50% and 90%, respectively, in a volume-weighted particle size distribution of the silicon-based active material,
SSA is a specific surface area in a unit of $m^2/g$ of the silicon-based active material, and
$I_C$ is a peak intensity corresponding to a crystalline region of the silicon-based active material obtained through a Raman spectroscopy, and $I_A$ is a peak intensity corresponding to an amorphous region of the silicon-based active material obtained through the Raman spectroscopy.

2. The anode active material for a lithium secondary battery of claim 1, wherein, in Equation 1, Ic is a maximum value of peak intensities measured at a Raman shift of 500 $cm^{-1}$ to 530 $cm^{-1}$, and $I_A$ is a maximum value of peak intensities measured at a Raman shift of 450 $cm^{-1}$ to 490 $cm^{-1}$.

3. The anode active material for a lithium secondary battery of any one of claims 1 and 2, wherein the core particle includes SiOx (0<x<2).

4. The anode active material for a lithium secondary battery of any one of claims 1 to 3, wherein the carbon coating includes a crystalline carbon or an amorphous carbon.

5. The anode active material for a lithium secondary battery of any one of claims 1 to 4, wherein the carbon coating covers 50% or more of an outer surface of the core particle.

6. The anode active material for a lithium secondary battery of any one of claims 1 to 5, wherein the SPAN in Equation 1 is in a range from 0.7 to 1.2.

7. The anode active material for a lithium secondary battery of any one of claims 1 to 6, wherein the specific surface area of the silicon-based active material is in a range from 1 $m^2/g$ to 2 $m^2/g$.

8. The anode active material for a lithium secondary battery of any one of claims 1 to 7, wherein an $S_B$ defined by Equation 2 is in a range from 1.5 to 3.0:

$$[Equation\ 2]$$

$$S_B = D_{50}/(SSA)^2$$

9. The anode active material for a lithium secondary battery of any one of claims 1 to 8, wherein a content of particles having a diameter of 2 $\mu$m or less in the silicon-based active material is in a range from 0.2 wt% to 1.0 wt% based on a total weight of the silicon-based active material.

10. The anode active material for a lithium secondary battery of any one of claims 1 to 9, wherein a minimum particle diameter ($D_{min}$) of the silicon-based active material is 1.1 $\mu$m or more.

11. The anode active material for a lithium secondary battery of any one of claims 1 to 10, wherein a maximum particle diameter ($D_{max}$) of the silicon-based active material is 25 $\mu$m or less.

12. The anode active material for a lithium secondary battery of any one of claims 1 to 11, further comprising a carbon-based active material.

13. The anode active material for a lithium secondary battery of claim 12, wherein the carbon-based active material includes artificial graphite, natural graphite or a mixture thereof.

14. The anode active material for a lithium secondary battery of claim 12, wherein a content of the silicon-based active material is greater than 0 wt% and less than or equal to 15 wt% based on a total weight of the anode active material for a lithium secondary battery.

15. A lithium secondary battery, comprising:

an anode comprising the anode active material for a lithium secondary battery according to any one of claims 1 to 14; and
a cathode facing the anode.

## FIG. 1

## FIG. 2

# FIG. 3

Europäisches
Patentamt

European
Patent Office

Office européen
des brevets

# EUROPEAN SEARCH REPORT

Application Number

EP 24 15 3899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU WENPING ET AL: "The effect of carbon coating on graphite@nano-Si composite as anode materials for Li-ion batteries", JOURNAL OF SOLID STATE ELECTROCHEMISTRY, SPRINGER, BERLIN, DE, vol. 23, no. 12, 16 November 2019 (2019-11-16), pages 3363-3372, XP036934845, ISSN: 1432-8488, DOI: 10.1007/S10008-019-04413-3 [retrieved on 2019-11-16] * abstract * * Sample preparation * * Electrochemical measurement * * page 3369, left-hand column, paragraph third * * example 3; table 1 * * figure 4a * * figure 4d * * figure 7c * | 1-5, 8-10, 12-15 | INV. H01M4/134 H01M4/36 H01M4/38 H01M10/0525 |

- - - - -

-/--

|  |  |  | TECHNICAL FIELDS SEARCHED (IPC) |
|---|---|---|---|
|  |  |  | H01M |

The present search report has been drawn up for all claims

| Place of search | Date of completion of the search | Examiner |
|---|---|---|
| The Hague | 6 June 2024 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

Application Number

EP 24 15 3899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU WENPING ET AL: "The Electrochemical Performance of Si/C Composites with Different Silicon Amounts As Lithium Anode Material", JOURNAL OF ELECTRONIC MATERIALS, vol. 50, no. 4, 29 January 2021 (2021-01-29), pages 2232-2241, XP037396963, ISSN: 0361-5235, DOI: 10.1007/S11664-021-08754-6 * abstract * * Sample preparation * * Electrochemical measurements * * page 2238, left-hand column, paragraph first * * example 1; table 1 * * figure 3b * * figure 3c * * figure 6a * ----- | 1-7,9, 10,12-15 | |
| X | EP 3 748 741 A1 (HITACHI CHEMICAL CO LTD [JP]) 9 December 2020 (2020-12-09) * abstract * * paragraph [0170] - paragraph [0171] * * example 6; table 1 * ----- -/-- | 1-5,7, 11,12,15 | TECHNICAL FIELDS SEARCHED (IPC) |

The present search report has been drawn up for all claims

| Place of search | Date of completion of the search | Examiner |
|---|---|---|
| The Hague | 6 June 2024 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

page 2 of 3

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | TARDIF SAMUEL ET AL: "Operando Raman Spectroscopy and Synchrotron X-ray Diffraction of Lithiation/Delithiation in Silicon Nanoparticle Anodes", ACS NANO, vol. 11, no. 11, 9 November 2017 (2017-11-09), pages 11306-11316, XP055891331, US ISSN: 1936-0851, DOI: 10.1021/acsnano.7b05796 * figure 3d * * page 11311, right-hand column, paragraph second * | | |
| A | MINGCAI ZHAO ET AL: "The preparation of mass producible, highly-cycling stable Si/C anode materials with nano-sized silicon crystals embedded in highly amorphous silicon matrix", NANOTECHNOLOGY, INSTITUTE OF PHYSICS PUBLISHING, BRISTOL, GB, vol. 32, no. 48, 7 September 2021 (2021-09-07), page 485404, XP020370923, ISSN: 0957-4484, DOI: 10.1088/1361-6528/AC2018 [retrieved on 2021-09-07] * abstract * | 1-15 | |
| | | | TECHNICAL FIELDS SEARCHED (IPC) |

The present search report has been drawn up for all claims

| Place of search | Date of completion of the search | Examiner |
|---|---|---|
| The Hague | 6 June 2024 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 15 3899

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2024

| Patent document cited in search report | | Publication date | Patent family member(s) | | Publication date |
|---|---|---|---|---|---|
| EP 3748741 | A1 | 09-12-2020 | CN | 111656583 A | 11-09-2020 |
| | | | EP | 3748741 A1 | 09-12-2020 |
| | | | JP | 6451915 B1 | 16-01-2019 |
| | | | JP | WO2019150511 A1 | 06-02-2020 |
| | | | KR | 20200110754 A | 25-09-2020 |
| | | | TW | 201935741 A | 01-09-2019 |
| | | | US | 2020373564 A1 | 26-11-2020 |
| | | | WO | 2019150511 A1 | 08-08-2019 |

EPO FORM P0459

For more details about this annex : see Official Journal of the European Patent Office, No. 12/82